# EUROPÄISCHE PATENTSCHRIFT

(11) **EP 3 444 532 B1**
(45) Veröffentlichungstag und Bekanntmachung des Hinweises auf die Patenterteilung: **18.09.2019**
(21) Anmeldenummer: 18172523.5
(22) Anmeldetag: 16.05.2018
(51) Int. Cl.: F16B 2/10, F24C 15/20

(54) **DUNSTABZUGSHAUBE MIT EINER KLEMMEINHEIT ZUM FESTKLEMMEN EINER GLASSCHEIBE UND MIT EINER BEFESTIGUNGSVORRICHTUNG ZUM BEFESTIGEN DER GLASSCHIEBE**
EXTRACTOR HOOD WITH A CLAMPING UNIT FOR CLAMPING A GLASS PANE AND WITH A FASTENING DEVICE FOR SECURING THE GLASS PANE
HOTTE ASPIRANTE AVEC UNE UNITÉ DE SERRAGE DESTINÉE À SERRER UNE VITRE ET AVEC UN DISPOSITIF DE FIXATION POUR FIXER LA VITRE

(30) Priorität: 31.05.2017 DE 102017111903
(43) Veröffentlichungstag der Anmeldung: 20.02.2019
(73) Patentinhaber: Miele & Cie. KG, 33332 Gütersloh (DE)
(72) Erfinder: Robbert, Andreas, 59469 Ense-Lüttringen (DE); Schüsseler, Dirk, 59821 Arnsberg (DE); Eckardt, Gerd, 59846 Sundern (DE)

(56) Entgegenhaltungen:
- DE-A1-102010 003 901
- DE-A1-102014 216 165
- DE-B4-102008 047 968
- JP-B2- 5 148 198

## Beschreibung

Die Erfindung betrifft eine Dunstabzugshaube mit einer Befestigungsvorrichtung zum Befestigen zumindest einer Glasscheibe an der Dunstabzugshaube.

Für Dunstabzugshaube können beispielsweise Glasscheiben werkseitig montiert werden. Dies kann insbesondere entweder durch sichtbare Verschraubungen oder mittels aufgeklebter Befestigungsteile an der Glasscheibe in der Dunstabzugshaube erfolgen. Aus der Druckschrift DE 10 2008 047 968 B4 ist eine Dunstabzugshaube bekannt, bei der die sichtbare Verschraubung hinter einer entnehmbaren Filtereinrichtung versteckt ist.

Aus den Druckschriften DE 10 2010 003 901 A1, DE 10 2014 216 165 A1 und
DE 10 2008 047 968 B4 ist eine Dunstabzugshaube bekannt, bei der die Befestigungsvorrichtung zumindest eine Klemmeinheit sowie eine Schieneneinheit aufweist, wobei die Klemmeinheit einen Führungsabschnitt zum Führen der Glasscheibe entlang einer Führungsachse aufweist.Der Erfindung stellt sich die Aufgabe, eine verbesserte Dunstabzugshaube mit einer Befestigungsvorrichtung zum Befestigen zumindest einer Glasscheibe an einer Dunstabzugshaube bereitzustellen.

Erfindungsgemäß wird diese Aufgabe durch eine Dunstabzugshaube mit einer Befestigungsvorrichtung zum Befestigen zumindest einer Glasscheibe an einer Dunstabzugshaube mit den Merkmalen des Anspruch 1 gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen unter anderem darin, dass für eine Dunstabzugshaube zumindest eine Glasscheibe mit verborgener Befestigung realisiert werden kann. Anders ausgedrückt kann eine Dunstabzugshaube mit verborgener Glasscheibenbefestigung realisiert werden. Hierbei kann auch eine nachträgliche Montage von Glasscheiben vor Ort oder im Werk ermöglicht werden. Zusätzlich kann eine Sicherung der Glasscheiben gegen Entnahme, Herausfallen und dergleichen erreicht werden. Somit können Glasscheiben für Dunstabzugshaube auf einfache, sichere und leicht zugängliche Weise befestigt werden. Beispielsweise können Glasscheiben unmontiert der Dunstabzugshaube beiliegen und vor Ort bzw. am Einsatzort angebracht werden. Die Glasscheiben brauchen insbesondere bei der Verpackung nicht mehr zusätzlich gesichert werden und können separat verpackt werden. Somit kann ein Aufbau erleichtert werden und kann eine Vielfalt der Verpackung erreicht werden. Es kann insbesondere eine Befestigung einer Glasscheibe durch Einschieben in eine Dunstabzugshaube mit zusätzlicher Verrastung realisiert werden. Diese Art der Befestigung kann für eine Scheibe sowie für mehrere Scheiben in Kombination eingesetzt werden. Beides Weise können individualisierte Scheiben eingesetzt werden, weil die Scheiben unabhängig von der Dunstabzugshaube ausgeführt sein können.

Es wird eine Klemmeinheit zum Festklemmen einer Glasscheibe für eine Dunstabzugshaube vorgestellt, wobei die Klemmeinheit zumindest folgende Merkmale aufweist:
einen Führungsabschnitt zum Führen der Glasscheibe entlang einer Führungsachse; und
einen Rastabschnitt zum Fixieren der Glasscheibe relativ zu der Klemmeinheit, wobei der Rastabschnitt quer zu der Führungsachse zwischen einer Verriegelungsstellung zum Unterbinden einer Bewegung der Glasscheibe entlang der Führungsachse und einer Durchlassstellung zum Ermöglichen einer Bewegung der Glasscheibe entlang der Führungsachse bewegbar ist, wobei der Rastabschnitt elastisch in die Durchlassstellung vorgespannt ist, wobei der Rastabschnitt in der Verriegelungsstellung arretierbar ist.

Die Dunstabzugshaube kann als ein Haushaltsgerät oder für professionellen oder gewerblichen Einsatz ausgeführt sein. Die Klemmeinheit kann aus einem Kunststoffmaterial ausgeformt sein.

Gemäß einer Ausführungsform kann der Rastabschnitt elastisch in die Verriegelungsstellung vorgespannt sein. Durch die hierdurch erzeugte Klemmwirkung des Rastabschnitts gegen die Glasscheibe wird es möglich die Glasscheibe zu zentrieren beziehungsweise das Spiel zwischen montierter Glasscheibe und Klemmeinheit zu reduzieren.

Der Rastabschnitt kann beispielsweise mittels einer Feder in die Verriegelungsstellung vorgespannt sein.

Insbesondere ist vorgesehen, dass der Rastabschnitt die Glasscheibe, unter Eingriff in einen Einbuchtungsabschnitt der Glasscheibe, relativ zu der Klemmeinheit fixiert.

Gemäß einer Ausführungsform kann der Rastabschnitt ausgebuchtet ausgeformt sein. Dabei kann der Rastabschnitt eine kreisbogenförmige Kontur aufweisen. Der Rastabschnitt kann eine gekrümmte oder gebogene Oberfläche aufweisen. Eine solche Ausführungsform bietet den Vorteil, dass eine einfache und zuverlässige Fixierung der Glasscheibe erzielt werden kann.

Auch kann der Führungsabschnitt zwei Führungsschienen aufweisen. Hierbei können die Führungsschienen ausgeformt sein, um einen Randbereich der Glasscheibe zwischen denselben zu klemmen. Dabei kann der Rastabschnitt zwischen den Führungsschienen angeordnet sein. Eine solche Ausführungsform bietet den Vorteil, dass durch Beschränken aller Freiheitsgrade ein sicheres und stabiles Festklemmen der Glasscheibe ermöglicht wird.

Es wird auch eine Befestigungsvorrichtung zum Befestigen zumindest einer Glasscheibe an einer Dunstabzugshaube vorgestellt, wobei die Befestigungsvorrichtung zumindest folgende Merkmale aufweist:
zumindest ein Exemplar einer Ausführungsform der vorstehend genannten Klemmeinheit; und
zumindest eine Schieneneinheit, wobei in der zumindest einen Schieneneinheit mindestens einen Anbringungsabschnitt zum Anbringen einer Klemmeinheit an der Schieneneinheit ausgeformt ist.

Zusammen mit der zumindest einen Schieneneinheit kann bei der Befestigungsvorrichtung zumindest ein Exemplar einer Ausführungsform der vorstehend genannten Klemmeinheit vorteilhaft verwendet werden, um zumindest eine Glasscheibe an einer Dunstabzugshaube zu befestigen. Jeder Anbringungsabschnitt kann ausgebildet sein, um eine einzelne Klemmeinheit an der Schieneneinheit anzubringen.

Gemäß einer Ausführungsform kann der mindestens eine Anbringungsabschnitt der zumindest einen Schieneneinheit als eine Durchgangsöffnung in Gestalt eines Langlochs zum Aufnehmen eines Verankerungsabschnittes der Klemmeinheit ausgeformt sein. Hierbei kann ein erstes Ende des Langlochs eine erste Breitenabmessung aufweisen. Dabei kann ein zweites Ende des Langlochs eine zweite Breitenabmessung. Hierbei kann die erste Breitenabmessung größer als die zweite Breitenabmessung sein. Eine Breitenabmessung kann eine Abmessung quer zu einer Längsabmessung entlang einer Längsstreckungsachse des Langlochs repräsentieren. Eine solche Ausführungsform bietet den Vorteil, dass der Anbringungsabschnitt konstruktiv unaufwendig und kostengünstig ausgeführt sein kann, um eine stabile und sichere Kopplung mit einer Klemmeinheit zu erreichen.

Dabei kann in einem an der Schieneneinheit angebrachten Zustand der Klemmeinheit der Rastabschnitt der Klemmeinheit in die Durchlassstellung bewegbar sein, wenn der Verankerungsabschnitt der Klemmeinheit an dem ersten Ende des Langlochs angeordnet ist, und der Rastabschnitt in der Verriegelungsstellung arretiert sein, wenn der Verankerungsabschnitt an dem zweiten Ende des Langlochs angeordnet ist. Eine solche Ausführungsform bietet den Vorteil, dass auf einfache und zuverlässige Weise eine robuste und sichere Befestigung der zumindest einen Glasscheibe realisiert werden kann.

Die erfindungsgemäße Dunstabzugshaube weist einen Korpus und die folgende Merkmale auf:
eine Befestigungsvorrichtung, bei der die Befestigungsvorrichtung an dem Korpus anordenbar oder angeordnet ist; und
zumindest eine Glasscheibe, wobei die zumindest eine Glasscheibe mittels der Befestigungsvorrichtung an der Dunstabzugshaube befestigbar oder befestigt ist.

In Verbindung mit der Dunstabzugshaube wird die Befestigungsvorrichtung vorteilhaft eingesetzt oder verwendet, um die zumindest eine Glasscheibe an der Dunstabzugshaube, insbesondere an dem Korpus der Dunstabzugshaube, zu befestigen.

Erfindungsgemäß weist die Glasscheibe in einem Randbereich zumindest einen Einbuchtungsabschnitt auf. Hierbei kann der Rastabschnitt der Klemmeinheit der Befestigungsvorrichtung ausgeformt sein, um in den Einbuchtungsabschnitt der Glasscheibe einzugreifen. Der Einbuchtungsabschnitt kann innerhalb eines Toleranzbereichs komplementär zu dem Rastabschnitt ausgeformt sein. Eine solche Ausführungsform bietet den Vorteil, dass lediglich eine unaufwendige Bearbeitung der Glasscheibe durchzuführen ist, um eine sichere und stabile Befestigung derselben zu bewerkstelligen.

Auch kann die Dunstabzugshaube eine schwenkbare Klappe aufweisen. Die Klappe kann an einem von einer Ansaugseite abgewandten Ende des Korpus der Dunstabzugshaube anordenbar oder angeordnet sein. Hierbei kann die Klappe mechanisch mit der zumindest einen Schieneneinheit der Befestigungsvorrichtung verbindbar oder verbunden sein. Dabei kann in einem mechanisch mit der zumindest einen Schieneneinheit verbundenen Zustand der Klappe eine Schwenkbewegung der Klappe auf die zumindest eine Schieneneinheit übertragbar sein. Die Klappe und die zumindest eine Schieneneinheit können gelenkig miteinander verbunden sein. Eine solche Ausführungsform bietet den Vorteil, dass eine einfache und zuverlässige Arretierung des Rastabschnittes der Klemmeinheit in der Verriegelungsstellung erreicht werden kann.

Beispielsweise kann die Klappe eine weitere Glasscheibe sein. Die weitere Glasscheibe kann hierbei bezüglich der zumindest einen Glasscheibe unterschiedlich, ähnlich oder identisch ausgeformt sein. Eine solche Ausführungsform bietet den Vorteil, dass Flexibilität und Freiheit bei der Auslegung sowie ein Arbeitskomfort beim Arbeiten mit der Dunstabzugshaube erhöht werden können.

Bei den vorstehend erläuterten Ausführungsformen sind einzelne Teile beweglich, insbesondere relativ zu anderen Elementen beweglich, eingerichtet und ausgeführt, welches auch als bewegbar bezeichnet ist.

Weiterhin sind bei den vorstehend erläuterten Ausführungsformen einzelne Teile derart eingerichtet und ausgeführt, dass sie gegen eine Beweglichkeit arretiert werden können, welches als arretierbar bezeichnet ist.

Ein Ausführungsbeispiel der Erfindung ist in den Zeichnungen rein schematisch dargestellt und wird nachfolgend näher beschrieben. Es zeigt
- Figur 1: eine schematische perspektivische Darstellung einer Befestigungsvorrichtung gemäß einem Ausführungsbeispiel der Erfindung;
- Figur 2: eine schematische perspektivische Darstellung einer Schieneneinheit der Befestigungsvorrichtung aus Figur 1;
- Figur 3: eine schematische perspektivische Darstellung einer Dunstabzugshaube gemäß einem Ausführungsbeispiel der Erfindung in einem Montagezustand;
- Figur 4: eine weitere schematische perspektivische Darstellung der Dunstabzugshaube aus Figur 3;
- Figur 5: eine schematische perspektivische Darstellung einer Glasscheibe der Dunstabzugshaube aus Figur 3 bzw. Figur 4; und
- Figur 6: eine schematische perspektivische Darstellung der Dunstabzugshaube aus Figur 3 bzw. Figur 4 in einem zumindest teilweise montierten Zustand.

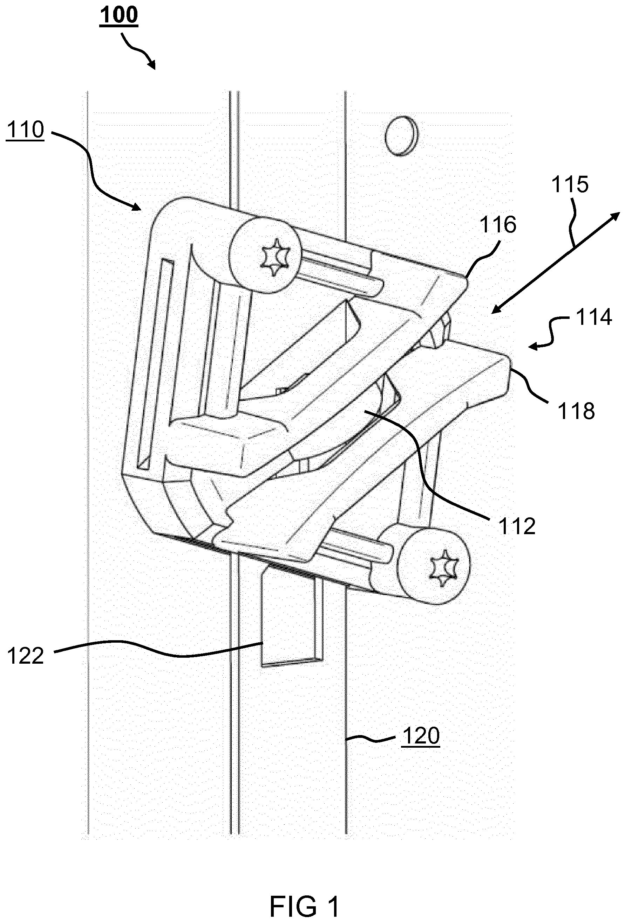

Figur 1 zeigt eine schematische perspektivische Darstellung einer Befestigungsvorrichtung 100 gemäß einem Ausführungsbeispiel der Erfindung. Die Befestigungsvorrichtung 100 ist ausgeformt, um zumindest eine Glasscheibe an einer Dunstabzugshaube zu befestigen. Dabei weist die Befestigungsvorrichtung 100 zumindest eine Klemmeinheit 110 und zumindest eine Schieneneinheit 120 auf. In der Darstellung von Figur 1 sind von der Befestigungsvorrichtung 100 beispielhaft lediglich eine Klemmeinheit 110 und ein Teilabschnitt einer Schieneneinheit 120 gezeigt.

Die Klemmeinheit 110 der Befestigungsvorrichtung 100 ist ausgeformt, um eine Glasscheibe für die Dunstabzugshaube festzuklemmen. Dazu weist die Klemmeinheit 110, somit jede Klemmeinheit 110 der Befestigungsvorrichtung 100, einen Rastabschnitt 112 und einen Führungsabschnitt 114 auf. Insbesondere kann die Klemmeinheit 110 aus einem Kunststoffmaterial ausgeformt sein.

Dabei ist der Führungsabschnitt 114 ausgeformt, um die Glasscheibe entlang einer Führungsachse 115 zu führen. Insbesondere ist der Führungsabschnitt 114 ausgeformt, Freiheitsgrade einer Bewegung der Glasscheibe auf eine Bewegung entlang der Führungsachse 115 zu beschränken.

Der Rastabschnitt 112 ist ausgeformt, um die Glasscheibe relativ zu der Klemmeinheit 110 zu fixieren. Dabei ist der Rastabschnitt 112 quer zu der Führungsachse 115 bewegbar. Auch ist der Rastabschnitt 112 hierbei zwischen einer Verriegelungsstellung und einer Durchlassstellung bewegbar. Dabei ist die Verriegelungsstellung des Rastabschnittes 112 zum Unterbinden einer Bewegung der Glasscheibe entlang der Führungsachse 115 geeignet. Die Durchlassstellung des Rastabschnittes 112 ist zum Ermöglichen einer Bewegung der Glasscheibe entlang der Führungsachse 115 geeignet. Der Rastabschnitt 112 ist elastisch in die Verriegelungsstellung vorgespannt. Ferner ist der Rastabschnitt 112 in der Verriegelungsstellung arretierbar.

Die Schieneneinheit 120 der Befestigungsvorrichtung 100 weist zumindest einen Anbringungsabschnitt 122 auf. Anders ausgedrückt ist in der Schieneneinheit 120 zumindest ein Anbringungsabschnitt 122 ausgeformt. In der Darstellung von Figur 1 ist beispielhaft lediglich ein Anbringungsabschnitt 122 der Schieneneinheit 120 gezeigt. Der Anbringungsabschnitt 122 ist ausgeformt, um die Klemmeinheit 110 an der Schieneneinheit 120 anzubringen bzw. ein Anbringen der Klemmeinheit 110 an der Schieneneinheit 120 zu bewirken und/oder zu ermöglichen. Insbesondere ist die Klemmeinheit 110 an dem Anbringungsabschnitt 122 der Schieneneinheit 120 formschlüssig anbringbar.

Die Klemmeinheit 110 kann auch als ein Klemmstück bezeichnet werden. Die Schieneneinheit 120 kann auch als ein Schieber bzw. ein Sicherungselement bezeichnet werden. Durch Verschieben der Schieneneinheit 120 kann beispielsweise eine Feder, mittels derer der Rastabschnitt 112 elastisch vorgespannt ist, festgesetzt und gesichert werden. Auch ist es möglich, dass durch Verschieben der Schieneneinheit 120 der Rastabschnitt 112 in der Verriegelungsstellung fixiert ist. Das Verschieben der Schieneneinheit 120 ermöglicht somit, dass der Rastabschnitt 112 in der Verriegelungsstellung festgesetzt und gegen eine Bewegung in die Durchlassstellung gesichert ist.

Gemäß dem in Figur 1 dargestellten Ausführungsbeispiel der Erfindung ist der Rastabschnitt 112 der Klemmeinheit 110 ausgebuchtet, gewölbt bzw. gekrümmt ausgeformt. Ferner weist gemäß dem in Figur 1 gezeigten Ausführungsbeispiel der Erfindung der Führungsabschnitt 114 der Klemmeinheit 110 zwei Führungsschienen 116 und 118 auf. Zwischen den Führungsschienen 116 und 118 ist der Rastabschnitt 112 angeordnet. Die Führungsschienen 116 und 118 sind ausgeformt, um einen Randbereich der Glasscheibe zwischen denselben zu klemmen.

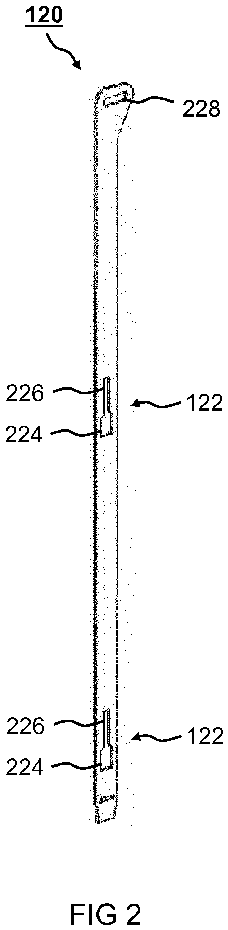

Figur 2 zeigt eine schematische perspektivische Darstellung der Schieneneinheit 120 der Befestigungsvorrichtung aus Figur 1. Schieneneinheit 120 weist lediglich beispielhaft zwei Anbringungsabschnitte 122 auf. Gemäß dem hier dargestellten Ausführungsbeispiel der Erfindung ist jeder der Anbringungsabschnitte 122 als eine Durchgangsöffnung in Gestalt eines Langlochs zum Aufnehmen eines Verankerungsabschnittes der Klemmeinheit ausgeformt.

Jedes Langloch bzw. jeder Anbringungsabschnitt 122 weist ein erstes Ende 224 mit einer ersten Breitenabmessung und ein zweites Ende 226 mit einer zweiten Breitenabmessung auf. Dabei ist die erste Breitenabmessung größer als die zweite Breitenabmessung. In einem an der Schieneneinheit 120 angebrachten Zustand der Klemmeinheit der Befestigungsvorrichtung ist der Rastabschnitt der Klemmeinheit in die Durchlassstellung bewegbar, wenn der Verankerungsabschnitt der Klemmeinheit an dem ersten Ende 224 des Langlochs bzw. Anbringungsabschnittes 122 angeordnet ist. Ferner ist in dem an der Schieneneinheit 120 angebrachten Zustand der Klemmeinheit der Rastabschnitt in der Verriegelungsstellung arretiert, wenn der Verankerungsabschnitt an dem zweiten Ende 226 des Langlochs bzw. Anbringungsabschnittes 122 angeordnet ist.

An einem Ende weist die Schieneneinheit 120 einen Verbindungsabschnitt 228 auf. Der Verbindungsabschnitt 228 ist ausgeformt, um mechanisch mit einem Element der Dunstabzugshaube verbunden zu sein oder zu werden, um eine Verschiebung der Schieneneinheit 120 relativ zu der zumindest einen Klemmeinheit der Befestigungsvorrichtung zu ermöglichen. Der Verbindungsabschnitt 228 ist gemäß dem hier dargestellten Ausführungsbeispiel der Erfindung als eine Durchgangsöffnung ausgeformt.

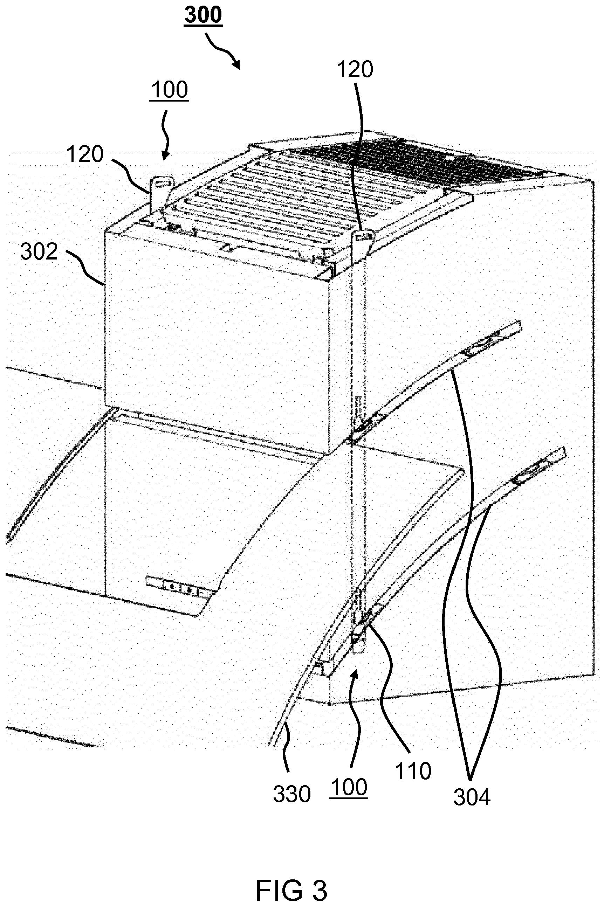

Figur 3 zeigt eine schematische perspektivische Darstellung einer Dunstabzugshaube 300 gemäß einem Ausführungsbeispiel der Erfindung in einem Montagezustand. Die Dunstabzugshaube 300 weist eine Befestigungsvorrichtung 100 wie die Befestigungsvorrichtung aus Figur 1 auf. Gemäß dem hier dargestellten Ausführungsbeispiel der Erfindung weist die Befestigungsvorrichtung 100 lediglich beispielhaft zwei Schieneneinheiten 120 mit jeweils zwei Klemmeinheiten 110 auf, wobei in Figur 3 aus Platzgründen lediglich eine Klemmeinheit 110 explizit mit Bezugszeichen versehen ist.

Ferner weist die Dunstabzugshaube 300 einen Korpus 302 auf. Der Korpus 302 kann auch als ein Gehäuse 302 bezeichnet werden. In dem Korpus 302 bzw. Gehäuse 302 sind Ausschnitte 304 ausgeformt. Zudem weist die Dunstabzugshaube 300 zumindest eine Glasscheibe 330 auf. In der Darstellung von Figur 3 ist beispielhaft lediglich eine Glasscheibe 330 gezeigt.

An dem Korpus 302 ist die Befestigungsvorrichtung 100 angeordnet bzw. angebracht. Genauer gesagt sind die Schieneneinheiten 120 der Befestigungsvorrichtung 100 an dem Korpus 302 angeordnet. Die Ausschnitte 304 des Korpus 302 sind ausgeformt, um einer Kontur der zumindest einen Glasscheibe 330 zu folgen. Gemäß dem hier dargestellten Ausführungsbeispiel der Erfindung weisen die Ausschnitte 304 einen gekrümmten Verlauf auf. Die Glasscheibe 330 ist gekrümmt ausgeformt.

Die Klemmeinheiten 110 der Befestigungsvorrichtung 100 sind im Bereich der Ausschnitte 304 angeordnet. Dabei sind die Klemmeinheiten 110 relativ zu dem Korpus 302 ortsfest bzw. stationär angeordnet.

Die zumindest eine Glasscheibe 330 ist mittels der Befestigungsvorrichtung 100 an der Dunstabzugshaube 300 bzw. dem Korpus 302 der Dunstabzugshaube 300 befestigbar. In dem in Figur 3 gezeigten Montagezustand der Dunstabzugshaube 300 ist die Glasscheibe 330 für ein Befestigen an der Dunstabzugshaube 300 mittels der Befestigungsvorrichtung 100 vorbereitet. Hierbei ist die Glasscheibe 330 mit einem der Ausschnitte 304 ausgerichtet positioniert.

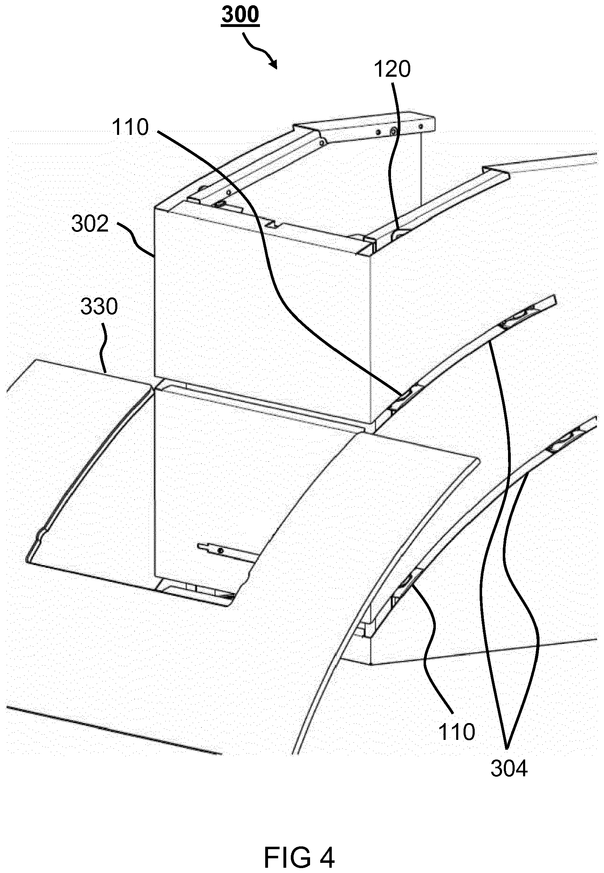

Figur 4 zeigt eine weitere schematische perspektivische Darstellung der Dunstabzugshaube aus Figur 3. Die Darstellung in Figur 4 entspricht der Darstellung aus Figur 3 im Wesentlichen mit Ausnahme dessen, dass in Figur 4 darstellungsbedingt Teilabschnitte der Befestigungsvorrichtung durch den Korpus 302 in der Ansicht verdeckt sind.

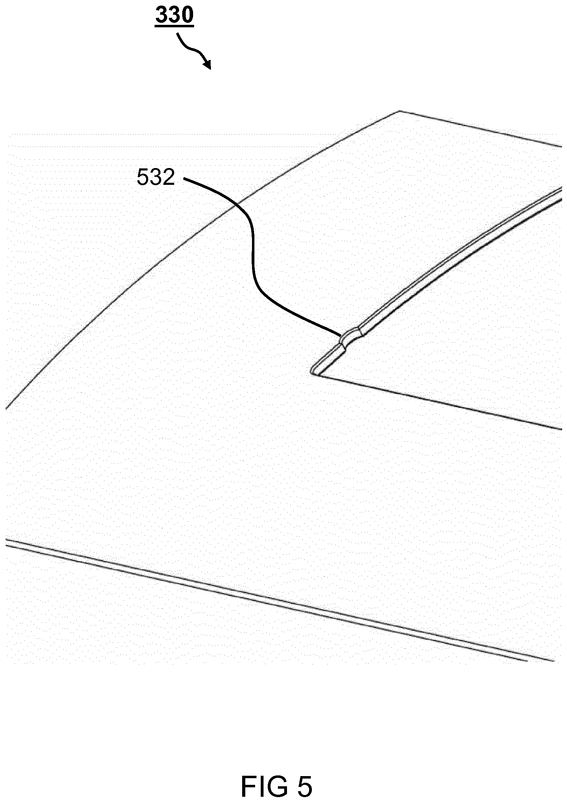

Figur 5 zeigt eine schematische perspektivische Darstellung der Glasscheibe 330 der Dunstabzugshaube aus Figur 3 bzw. Figur 4. die Glasscheibe 330 weist in einem Randbereich derselben zumindest einen Einbuchtungsabschnitt 532 auf. In Figur 5 ist darstellungsbedingt und beispielhaft lediglich ein Einbuchtungsabschnitt 532 gezeigt. Der Einbuchtungsabschnitt 532 ist als ein ausgefräster Abschnitt ausgeformt bzw. mittels Fräsens ausgeformt. Der Rastabschnitt der Klemmeinheit der Befestigungsvorrichtung ist ausgeformt, um in den Einbuchtungsabschnitt 532 der Glasscheibe 330 einzugreifen.

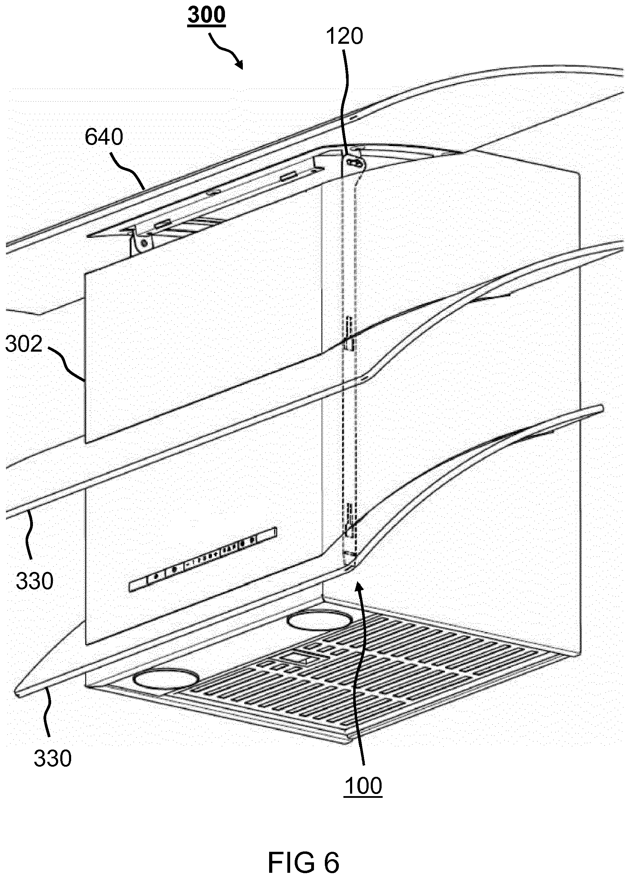

Figur 6 zeigt eine schematische perspektivische Darstellung der Dunstabzugshaube 300 aus Figur 3 bzw. Figur 4 in einem zumindest teilweise montierten Zustand. In dem zumindest teilweise montierten Zustand der Dunstabzugshaube 300 sind von der Dunstabzugshaube 300 verglichen mit der Darstellung aus Figur 3 bzw. Figur 4 hierbei in Figur 6 eine zusätzliche Glasscheibe 330 und eine schwenkbare Klappe 640 gezeigt.

Die beiden Glasscheiben 330 sind mittels der Befestigungsvorrichtung 100 an dem Korpus 302 der Dunstabzugshaube 300 befestigt. Die schwenkbare Klappe 640 ist an einem von einer Ansaugseite abgewandten Ende des Korpus 302 der Dunstabzugshaube 300 angeordnet. Dabei ist die schwenkbare Klappe 640 mechanisch mit der zumindest einen Schieneneinheit 120 der Befestigungsvorrichtung 100 verbunden. Eine Schwenkbewegung der Klappe 640 ist auf die zumindest eine Schieneneinheit 120 der Befestigungsvorrichtung 100 übertragbar. Somit ist die zumindest eine Schieneneinheit 120 der Befestigungsvorrichtung 100 relativ zu der zumindest einen Klemmeinheit der Befestigungsvorrichtung 100 bewegbar, um den Rastabschnitt jeder Klemmeinheit in der Verriegelungsstellung zu arretieren. Beispielsweise ist die schwenkbare Klappe 640 als eine weitere Glasscheibe ausgeführt.

Unter Bezugnahme auf die vorstehend beschriebenen Figuren wird nachfolgend ein Ausführungsbeispiel der Erfindung nochmals zusammenfassend und mit anderen Worten kurz erläutert.

Zum Einsatz kommt die Klemmeinheit 110 bzw. ein Klemmstück 110. Jede einzelne Glasscheibe 330 wird in die Dunstabzugshaube 300, insbesondere die Ausschnitte 304 des Korpus 302 der Dunstabzugshaube 300 geschoben. In jeder Glasscheibe 330 ist zumindest ein Einbuchtungsabschnitt 532 in Gestalt einer eingefrästen Kontur ausgeformt. Die Klemmeinheit 110 kann beispielsweise als ein vormontiertes Befestigungsteil, insbesondere ein Kunststoffteil, an der Dunstabzugshaube 300 vorgesehen sein. Der Rastabschnitt 112 jeder Klemmeinheit 110 ist ausgebildet, um in einen Einbuchtungsabschnitt 532 der Glasscheibe 330 einzurasten und die Glasscheibe 330 zu fixieren. Die zumindest eine Schieneneinheit 120 als eine Strebe im Gerät, ist bewegbar, um einen Federweg des Rastabschnittes 112 jeder Klemmeinheit 110 zu kontern und somit für eine Sicherung gegen Herausnehmen oder Herausfallen der zumindest einen Glasscheibe 330 zu sorgen.

## Patentansprüche

1. Dunstabzugshaube (300), aufweisend
einen Korpus (302),
zumindest eine Glasscheibe (330) und
eine Befestigungsvorrichtung (100), welche zum Befestigen der zumindest einen Glasscheibe (330) an der Dunstabzugshaube (300) vorgesehen ist und wobei die zumindest eine Glasscheibe (330) mittels der Befestigungsvorrichtung (100) an der Dunstabzugshaube (300) befestigbar oder befestigt ist,
wobei die Befestigungsvorrichtung (100) an dem Korpus (302) anordenbar oder angeordnet ist und zumindest eine Klemmeinheit (110) sowie eine Schieneneinheit (120) aufweist,
wobei die Klemmeinheit (110) einen Führungsabschnitt (114) zum Führen der Glasscheibe (330) entlang einer Führungsachse (115) und einen Rastabschnitt (112) zum Fixieren der Glasscheibe (330) relativ zu der Klemmeinheit (110) aufweist,
wobei in der zumindest einen Schieneneinheit (120) mindestens ein Anbringungsabschnitt (122) zum Anbringen der Klemmeinheit (110) an der Schieneneinheit (120) ausgeformt ist,
**dadurch gekennzeichnet, dass**
der Rastabschnitt (112) quer zu der Führungsachse (115) zwischen einer Verriegelungsstellung zum Unterbinden einer Bewegung der Glasscheibe (330) entlang der Führungsachse (115) und einer Durchlassstellung zum Ermöglichen einer Bewegung der Glasscheibe (330) entlang der Führungsachse (115) bewegbar ist, wobei der Rastabschnitt (112) elastisch in die Durchlassstellung vorgespannt ist, wobei der Rastabschnitt (112) in der Verriegelungsstellung arretierbar ist,
wobei die Glasscheibe (330) in einem Randbereich zumindest einen Einbuchtungsabschnitt (532) aufweist, wobei der Rastabschnitt (112) der Klemmeinheit (110) der Befestigungsvorrichtung (100) ausgeformt ist, um in den Einbuchtungsabschnitt (532) der Glasscheibe (330) einzugreifen.

2. Dunstabzugshaube (300) gemäß Anspruch 1, **dadurch gekennzeichnet, dass** der Rastabschnitt (112) ausgebuchtet ausgeformt ist.

3. Dunstabzugshaube (300) gemäß einem der Ansprüche 1 oder 2 wobei der Rastabschnitt (112) elastisch in die Verriegelungsstellung vorgespannt ist.

4. Dunstabzugshaube (300) gemäß einem der vorangegangenen Ansprüche, **dadurch gekennzeichnet, dass** der Führungsabschnitt (114) zwei Führungsschienen (116, 118) aufweist, wobei die Führungsschienen (116, 118) ausgeformt sind, um einen Randbereich der Glasscheibe (330) zwischen denselben zu klemmen, wobei der Rastabschnitt (112) zwischen den Führungsschienen (116, 118) angeordnet ist.

5. Dunstabzugshaube (300) gemäß einem der vorangegangenen Ansprüche, **dadurch gekennzeichnet, dass** der mindestens eine Anbringungsabschnitt (122) der zumindest einen Schieneneinheit (120) als eine Durchgangsöffnung in Gestalt eines Langlochs zum Aufnehmen eines Verankerungsabschnittes der Klemmeinheit (110) ausgeformt ist, wobei ein erstes Ende (224) des Langlochs eine erste Breitenabmessung aufweist, wobei ein zweites Ende (226) des Langlochs eine zweite Breitenabmessung aufweist, wobei die erste Breitenabmessung größer als die zweite Breitenabmessung ist.

6. Dunstabzugshaube (300) gemäß einem der vorangegangenen Ansprüche, **dadurch gekennzeichnet, dass** in einem an der Schieneneinheit (120) angebrachten Zustand der Klemmeinheit (110) der Rastabschnitt (112) der Klemmeinheit (110) in die Durchlassstellung bewegbar ist, wenn der Verankerungsabschnitt der Klemmeinheit (110) an dem ersten Ende (224) des Langlochs angeordnet ist, und der Rastabschnitt (112) in der Verriegelungsstellung arretiert ist, wenn der Verankerungsabschnitt an dem zweiten Ende (226) des Langlochs angeordnet ist.

7. Dunstabzugshaube (300) gemäß einem der vorangegangenen Ansprüche, **gekennzeichnet durch** eine schwenkbare Klappe (640), wobei die Klappe (640) an einem von einer Ansaugseite abgewandten Ende des Korpus (302) der Dunstabzugshaube (300) anordenbar oder angeordnet ist, wobei die Klappe (640) mechanisch mit der zumindest einen Schieneneinheit (120) der Befestigungsvorrichtung (100) verbindbar oder verbunden ist, wobei in einem mechanisch mit der zumindest einen Schieneneinheit (120) verbundenen Zustand der Klappe (640) eine Schwenkbewegung der Klappe (640) auf die zumindest eine Schieneneinheit (120) übertragbar ist.

8. Dunstabzugshaube (300) gemäß Anspruch 7, **dadurch gekennzeichnet, dass** die Klappe (640) eine weitere Glasscheibe ist.

## Claims

1. Extractor hood (300) comprising a body (302), at least one glass pane (330) and a fastening device (100) which is provided for fastening the at least one glass pane (330) to the extractor hood (300), and the at least one glass pane (330) being fastenable or fastened to the extractor hood (300) by means of the fastening device (100), the fastening device (100) being arrangeable or arranged on the body (302) and having at least one clamping unit (110) and a rail unit (120), the clamping unit (110) having a guiding portion (114) for guiding the glass pane (330) along a guide axis (115) and a latching portion (112) for securing the glass pane (330) relative to the clamping unit (110), at least one mounting portion (122) for mounting the clamping unit (110) on the rail unit (120) being formed in the at least one rail unit (120), **characterised in that** the latching portion (112) can be moved, transversely to the guide axis (115), between a locking position for preventing the glass pane (330) from moving along the guide axis (115) and an open position for allowing the glass pane (330) to move along the guide axis (115), the latching portion (112) being resiliently biased towards the open position, it being possible to lock the latching portion (112) in the locking position, the glass pane (330) having at least one indented portion (532) in an edge region, the latching portion (112) of the clamping unit (110) of the fastening device (100) being designed to engage in the indented portion (532) of the glass pane (330).

2. Extractor hood (300) according to claim 1, **characterised in that** the latching portion (112) is bulged.

3. Extractor hood (300) according to either claim 1 or claim 2, wherein the latching portion (112) is resiliently biased towards the locking position.

4. Extractor hood (300) according to any of the preceding claims, **characterised in that** the guiding portion (114) has two guiding rails (116, 118), the guiding rails (116, 118) being designed to clamp an edge region of the glass pane (330) therebetween, the latching portion (112) being arranged between the guiding rails (116, 118).

5. Extractor hood (300) according to any of the preceding claims, **characterised in that** the at least one mounting portion (122) of the at least one rail unit (120) is formed as a through-opening in the form of a slot for receiving an anchoring portion of the clamping unit (110), a first end (224) of the slot having a first width dimension, a second end (226) of the slot having a second width dimension, the first width dimension being greater than the second width dimension.

6. Extractor hood (300) according to any of the preceding claims, **characterised in that**, when the clamping unit (110) is mounted on the rail unit (120), the latching portion (112) of the clamping unit (110) can be moved into the open position when the anchoring portion of the clamping unit (110) is arranged at the first end (224) of the slot, and the latching portion (112) is locked in the locking position when the anchoring portion is arranged at the second end (226) of the slot.

7. Extractor hood (300) according to any of the preceding claims, **characterised by** a pivotable flap (640), the flap (640) being arrangeable or arranged at an end of the body (302) of the extractor hood (300) that is remote from a suction side, the flap (640) being mechanically connectable or connected to the at least one rail unit (120) of the fastening device (100), it being possible to convey a pivoting movement of the flap (640) to the at least one rail unit (120) when the flap (640) is mechanically connected to the at least one rail unit (120).

8. Extractor hood (300) according to claim 7, **characterised in that** the flap (640) is an additional glass pane.

## Revendications

1. Hotte aspirante (300) comprenant
un corps (302),
au moins une vitre (330), et
un dispositif de fixation (100) prévu pour la fixation de l'au moins une vitre (330) à la hotte aspirante (300), l'au moins une vitre (330) pouvant être fixée ou étant fixée à la hotte aspirante (300) au moyen du dispositif de fixation (100),
le dispositif de fixation (100) pouvant être disposé ou étant disposé sur le corps (302) et comportant au moins une unité de serrage (110) et un ensemble rail (120),
l'unité de serrage (110) comprenant une partie de guidage (114) destinée à guider la vitre (330) selon un axe de guidage (115) et une partie d'encliquetage (112) permettant de fixer la vitre (330) relativement à l'unité de serrage (110),
au moins une partie de montage (122) permettant de monter l'unité de serrage (110) sur l'ensemble rail (120) étant formée dans l'au moins un ensemble rail (120),
**caractérisée en ce que**
la partie de d'encliquetage (112) est mobile transversalement à l'axe de guidage (115) entre une position de verrouillage pour limiter le mouvement de la vitre (330) le long de l'axe de guidage (115), et une position de passage permettant le mouvement de la vitre (330) le long de l'axe de guidage (115), la partie d'encliquetage (112) étant sollicitée élastiquement dans la position de passage, la partie d'encliquetage (112) pouvant être verrouillée dans la position de verrouillage,
la vitre (330) présentant au moins une partie en forme d'anse (532) dans une partie de bord, la partie d'encliquetage (112) de l'unité de serrage (110) du dispositif de fixation (100) étant conçue pour venir en prise avec la partie en forme d'anse (532) de la vitre (330).

2. Hotte aspirante (300) selon la revendication 1, **caractérisée en ce que** la partie d'encliquetage (112) est formée de manière évidée.

3. Hotte aspirante (300) selon l'une des revendications 1 ou 2, dans laquelle la partie d'encliquetage (112) est sollicitée élastiquement dans la position de verrouillage.

4. Hotte aspirante (300) selon l'une des revendications précédentes, **caractérisée en ce que** la partie de guidage (114) comprend deux rails de guidage (116, 118), les rails de guidage (116, 118) étant formés pour serrer une partie de bord de la vitre (330) entre eux, la partie d'encliquetage (112) étant disposée entre les rails de guidage (116, 118).

5. Hotte aspirante (300) selon l'une des revendications précédentes, **caractérisée en ce que** l'au moins une partie de montage (122) de l'au moins un ensemble rail (120) est formée en tant que trou traversant sous la forme d'un orifice oblong destiné à recevoir une partie d'ancrage de l'unité de serrage (110), une première extrémité (224) de l'orifice oblong présentant une première dimension en largeur, une seconde extrémité (226) de l'orifice oblong présentant une seconde dimension en largeur, la première dimension en largeur étant supérieure à la seconde dimension en largeur.

6. Hotte aspirante (300) selon l'une des revendications précédentes, **caractérisée en ce que**, dans un état où l'unité de serrage (110) est fixée à l'ensemble rail (120), la partie d'encliquetage (112) de l'unité de serrage (110) est mobile dans la position de passage lorsque la partie d'ancrage de l'unité de serrage (110) est située à la première extrémité (224) de l'orifice oblong, et la partie d'encliquetage (112) est verrouillée dans la position de verrouillage lorsque la partie d'ancrage est située à la seconde extrémité (226) de l'orifice oblong.

7. Hotte aspirante (300) selon l'une des revendications précédentes, **caractérisée par** un volet pivotant (640), le volet (640) pouvant être disposé ou étant disposé à une extrémité du corps (302) de la hotte aspirante (300) opposée à un côté aspiration, le volet (640) pouvant être relié mécaniquement ou étant relié mécaniquement à au moins un ensemble rail (120) du dispositif de fixation (100), un mouvement de pivotement du volet (640) pouvant être transmis à l'au moins un ensemble rail (120) dans un état où le volet (640) est relié mécaniquement à l'au moins un ensemble rail (120).

8. Hotte aspirante (300) selon la revendication 7, **caractérisée en ce que** le volet (640) est une vitre supplémentaire.
